# EUROPEAN PATENT APPLICATION

(11) **EP 4 765 319 A1**
(43) Date of publication of application: **24.06.2026**
(21) Application number: 25864573.8
(22) Date of filing: 27.08.2025
(51) Int. Cl.: H01M 10/42, H01M 10/48, G01M 3/16

(54) **LEAKAGE DETECTION DEVICE AND BATTERY PACK COMPRISING SAME**

(30) Priority: 30.09.2024 KR 20240132483
(71) Applicant: LG ENERGY SOLUTION, LTD., Seoul 07335 (KR)
(72) Inventor: CHO, Seong Eun, (KR); PARK, Sung Kyu, (KR)
(74) Representative: Plasseraud IP
(86) International application number: PCT/KR2025/013039
(87) International publication number: WO 2026/071503

(57) **Abstract**

Disclosed are a leakage detection device including a moisture detection unit to which an absorption member is coupled, a fixing support portion configured to fix the moisture detection unit to a battery pack, and an extension portion configured to fix the moisture detection unit to the fixing support portion, wherein a lower end of the absorption member extends at least to a lower end of the fixing support portion, and a battery pack including the same. It is possible to rapidly detect even a small amount of coolant leakage.

## Description

### [Technical Field]

This application claims the benefit of priority to Korean Patent Application No. 2024-0132483 filed on September 30, 2024, the disclosure of which is incorporated herein by reference in its entirety.

The present invention relates to a leakage detection device and a battery pack including the same. More particularly, the present invention relates to a leakage detection device capable of rapidly detecting leakage of a refrigerant from a cooling device in a battery pack configured such that a sensing portion of a leakage detection device is not in contact with the bottom of the battery pack, thereby securing safety, and a battery pack including the same.

### [Background Art]

Secondary batteries have the advantage of having a long battery cell lifespan because the secondary batteries can be repeatedly charged and discharged. Consequently, the variety of devices using secondary batteries as an energy source is increasing.

In particular, lithium secondary batteries, which are charged and discharged by the migration of lithium ions, are used not only for small battery cells used in mobile devices and small electronic products due to high energy density and high charging voltage but also for medium and large battery packs used as energy sources for electric vehicles and energy storage systems that require high power and high voltage.

Since a charging and discharging process is an exothermic process, an increase in temperature of a lithium secondary battery inevitably occurs not only during the charging process but also during normal use. Furthermore, in a battery pack in which a plurality of battery cells is stacked, problems, such as explosion and fire, due to an exothermic phenomenon may occur.

Therefore, a cooling device is provided in the battery pack in order to inhibit an increase in temperature of the battery cells. If a refrigerant leaks from the cooling device and flows to the bottom of the battery pack, however, short circuit may occur, and if moisture permeates the battery cells, an electrolyte may react with the moisture, whereby the electrolyte may be depleted, and hydrofluoric acid may be generated, which may cause an increase in resistance of a positive electrode and a negative electrode.

In order to prevent the above problems, a method of detecting the presence of leakage using a leakage detection sensor installed in the battery pack may be used. However, the leakage detection sensor is installed such that a sensing member and a sensing portion are spaced apart from the bottom surface by a certain distance considering assemblability, and therefore leakage may be detected only when the height of the leaked coolant reaches the height of the sensing portion.

For a large-capacity battery pack, coolant leakage may be detected only after a large amount of coolant leaks so as to reach the height of the sensing portion, since the area of the bottom of a pack case is large.

As a result, the time required to detect coolant leakage increases, and detecting a small amount of coolant leakage is difficult.

In this case, the time required for coolant leakage alarm conditions to be met may be prolonged, and an additional event caused by the coolant leakage may occur in the interim. As a result, sufficient time to ensure user safety may not be guaranteed, whereby the user may be exposed to risks.

Patent Document 1 relates to a battery pack to which a leakage detection device is added, wherein the leakage detection device includes a housing and a humidity sensor, a plurality of through-holes is formed in the housing, and an absorption member is installed in the housing. When moisture is introduced through the through-holes formed in the housing, the absorption member absorbs the moisture, and the humidity sensor in the absorption member detects the moisture and provides an alarm to the user.

Patent Document 1 discloses the configuration that detects moisture using the leakage detection device in contact with the bottom of the battery pack, but does not suggest technology capable of rapidly and accurately detecting leakage when a leakage detection device disposed spaced apart from the bottom of the battery pack is used.

Therefore, there is a need for technology capable of rapidly detecting the leakage of a coolant in a battery pack even when a moisture detection unit is not in contact with the bottom of the battery pack, considering assemblability of a leakage detection device, thereby securing user safety.

### (Prior Art Document)

(Patent Document 1) Chinese Registered Utility Model Publication No. 215811417 (2022.02.11)

### [Disclosure]

### [Technical Problem]

The present invention has been made in view of the above problems, and it is an object of the present invention to provide a leakage detection device capable of rapidly detecting leakage of a coolant in a battery pack configured such that a moisture sensing portion is not in contact with the bottom of the battery pack, even if the amount of coolant leakage is small, and a battery pack including the same.

### [Technical Solution]

A leakage detection device according to the present invention to accomplish the above object includes a moisture detection unit to which an absorption member is coupled, a fixing support portion configured to fix the moisture detection unit to a battery pack, and an extension portion configured to fix the moisture detection unit to the fixing support portion, wherein a lower end of the absorption member extends at least to a lower end of the fixing support portion.

In the leakage detection device according to the present invention, the moisture detection unit may include a sensing portion configured to detect moisture, a wire configured to supply current to the sensing portion, a housing configured to receive the sensing portion therein, and an absorption member coupled to the sensing portion in physical contact therewith.

In the leakage detection device according to the present invention, the moisture detection unit may be fixed to the fixing support portion via the extension portion, a lower end of the sensing portion may be located higher than a plane where the lower end of the fixing support portion is located, and the sensing portion may be in indirect contact with the plane where the lower end of the fixing support portion is located via the absorption member.

The leakage detection device according to the present invention may further include an indicator configured to indicate moisture detection by the sensing portion.

In the leakage detection device according to the present invention, the absorption member may include fabric, sponge, or a superabsorbent polymer (SAP).

A battery pack including the leakage detection device according to the present invention includes a first receiving portion configured to receive at least one battery module, a second receiving portion configured to receive a BMS and an electrical component configured to control and check operations of the battery module and the leakage detection device, and the leakage detection device mounted on the bottom of the first receiving portion, wherein the leakage detection device is fixed as a result of a lower part of the fixing support portion being coupled to the bottom of the first receiving portion, and the lower end of the absorption member of the leakage detection device is located in contact with the bottom of the first receiving portion.

In the battery pack including the leakage detection device according to the present invention, the leakage detection device may be mounted at one corner of the bottom of the first receiving portion.

In the battery pack including the leakage detection device according to the present invention, the bottom of the first receiving portion may be formed in a flat shape, the fixing support portion of the leakage detection device may be coupled to the flat bottom of the first receiving portion in contact therewith, the sensing portion of the leakage detection device may be disposed spaced apart from the bottom of the first receiving portion, and the absorption member of the leakage detection device may be configured such that the lower end thereof is in contact with the bottom of the first receiving portion and at least a part thereof is in contact with the sensing portion.

In the battery pack including the leakage detection device according to the present invention, a downwardly concave recess may be formed in at least a part of the bottom of the first receiving portion, the leakage detection device may be located in the recess, the fixing support portion of the leakage detection device may be coupled to the bottom of the recess in contact therewith, the sensing portion of the leakage detection device may be disposed spaced apart from the bottom of the recess, and the absorption member of the leakage detection device may be configured such that the lower end thereof is in contact with the bottom of the recess and at least a part thereof is in contact with the sensing portion.

In the battery pack including the leakage detection device according to the present invention, a downwardly concave recess may be formed in at least a part of the bottom of the first receiving portion, the moisture detection unit of the leakage detection device may be located in the recess, the fixing support portion of the leakage detection device may be coupled to the bottom of the first receiving portion, excluding the recess, in contact therewith, the sensing portion of the leakage detection device may be disposed spaced apart from the bottom of the recess, and the absorption member of the leakage detection device may be configured such that the lower end thereof is in contact with the bottom of the recess and at least a part thereof is in contact with the sensing portion.

In the battery pack including the leakage detection device according to the present invention, the leakage detection device may be mounted at one corner of the bottom of the first receiving portion, and the bottom of the first receiving portion may be inclined such that a part where the leakage detection device is mounted slopes downward.

In the battery pack including the leakage detection device according to the present invention, when moisture comes into contact with the absorption member of the leakage detection device, the moisture diffused through the absorption member may come into contact with the sensing portion, and the sensing portion may transmit a signal indicating contact with moisture to the BMS.

A device including the battery pack according to the present invention includes a controller configured to receive a signal indicating that the sensing portion of the leakage detection device has come into contact with moisture and an alarm member configured to provide the signal to a user as visual information or auditory information.

In addition, the present invention may provide various combinations of the above solving means.

### [Advantageous Effects]

In the present invention, a sensing portion of a moisture detection unit is not in contact with the bottom of a battery pack, but an absorption member configured to connect the sensing portion to the bottom of the battery pack is provided. Even if the level of a coolant does not reach the sensing portion, therefore, the sensing portion may be in indirect contact with the coolant through the absorption member, whereby it is possible to detect moisture.

In addition, the bottom of the battery pack is configured to have a slope, or a recess is formed in the bottom of the battery pack, and the sensing portion is disposed at the bottom of the slope or in the recess, whereby it is possible to rapidly detect even a small amount of coolant leakage.

### [Description of Drawings]

FIG. 1 is a partial perspective view of a battery pack to which a leakage detection device according to the present invention is added.
FIG. 2 is a partial enlarged view of FIG. 1.
FIG. 3 is a vertical sectional view of a moisture detection unit, taken along line A-A' of FIG. 1.
FIG. 4 is a partial perspective view of a battery pack according to a first embodiment having a leakage detection device attached to the bottom of the battery pack.
FIG. 5 is a partial perspective view of a battery pack according to a second embodiment having a leakage detection device attached to the bottom of the battery pack.
FIG. 6 is a partial perspective view of a battery pack according to a third embodiment having a leakage detection device attached to the bottom of the battery pack.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

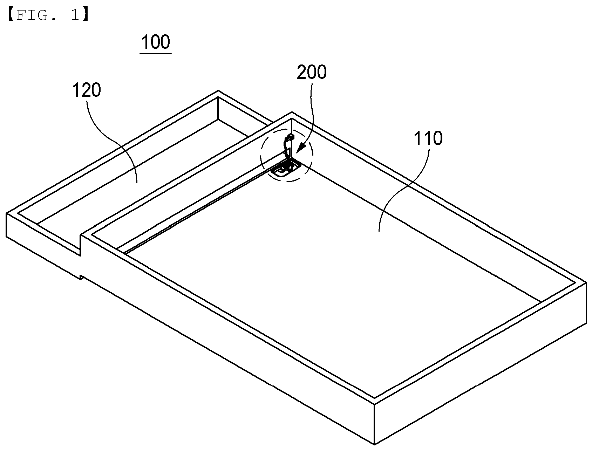

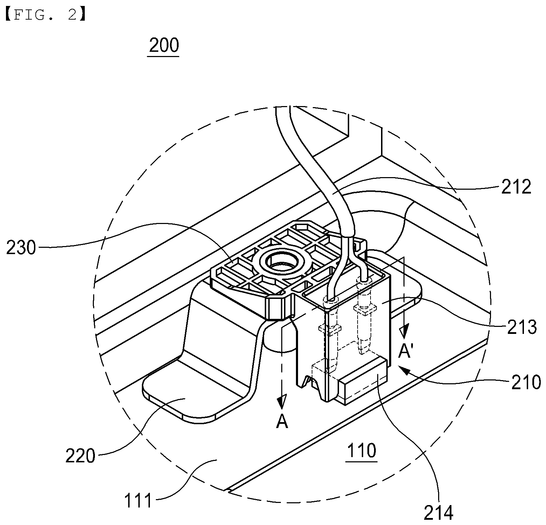

FIG. 1 is a partial perspective view of a battery pack to which a leakage detection device according to the present invention is added, and FIG. 2 is a partial enlarged view of FIG. 1.

Referring to FIGs. 1 and 2, the leakage detection device 200 according to the present invention includes a moisture detection unit 210 to which an absorption member 214 is coupled, a fixing support portion 220 configured to fix the moisture detection unit 210 to a battery pack 100, and an extension portion 230 configured to fix the moisture detection unit 210 to the fixing support portion 220.

That is, a lower part of the fixing support portion 220 is attached to the bottom of the battery pack 100 for stable fixation, and the extension portion 230, which extends from an outer periphery of one side of an upper part of the moisture detection unit 210, is coupled to the fixing support portion 220, whereby the position of the moisture detection unit 210 may be fixed. At this time, a lower end of the moisture detection unit 210 may be located higher than a lower end of the fixing support portion 220, or the lower end of the moisture detection unit 210 and the lower end of the fixing support portion 220 may be located on the same plane.

However, a lower end of the absorption member 214 coupled to the moisture detection unit 210 extends at least to the lower end of the fixing support portion 220. Since the lower part of the fixing support portion 220 is attached to the bottom of the battery pack 100, the lower end of the absorption member 214 may be understood to be in contact with the bottom of the battery pack 100.

Since the absorption member 214 is in contact with the bottom of the battery pack 100, as described above, the absorption member 214 may absorb a coolant having leaked from a cooling device in the battery pack 100 even when the level of the coolant is low.

Therefore, even if the amount of coolant leakage is small, rapid moisture detection is possible, whereby it is possible to prevent the occurrence of additional problems caused by coolant leakage.

Referring back to FIG. 1, the battery pack 100 according to the present invention includes a first receiving portion 110 configured to receive at least one battery module, a second receiving portion 120 configured to receive a BMS and an electrical component configured to control and check the operations of the at least one battery module and a leakage detection device 200, and the leakage detection device 200 mounted on the bottom of the first receiving portion 110, wherein the leakage detection device 200 is stably fixed to the battery pack 100 as the lower part of the fixing support portion 220 is coupled to the bottom of the first receiving portion 110, and the lower end of the absorption member 214 of the leakage detection device 200 is located in contact with the bottom of the first receiving portion 110.

Since battery modules may be compactly mounted in the first receiving portion 110 considering the energy density of the battery pack, the leakage detection device 200 may be mounted at one corner of the bottom of the first receiving portion 110 considering the disposition of the battery modules.

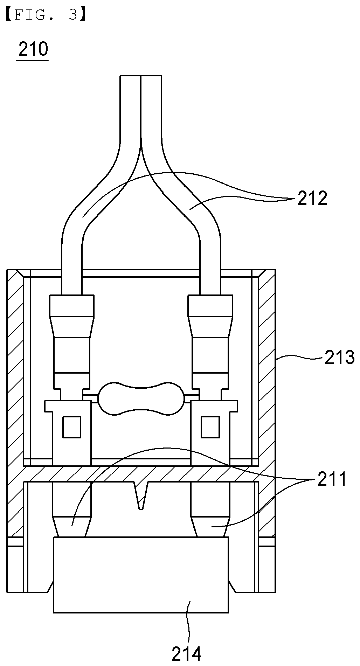

FIG. 3 is a vertical sectional view of the moisture detection unit, taken along line A-A' of FIG. 1.

Referring to FIG. 3, the moisture detection unit 210 according to the present invention includes a sensing portion 211 configured to detect moisture, a wire 212 configured to supply current to the sensing portion 211, a housing 213 configured to receive the sensing portion 211 therein, and an absorption member 214 coupled to the sensing portion 211 in physical contact therewith.

The absorption member 214 may be at least one selected from the group consisting of fabric, sponge, and a superabsorbent polymer (SAP).

The sensing portion 211 may be in contact with an upper end or at least a part of the absorption member 214, or may be inserted into the absorption member 214 in surface contact therewith, or the absorption member 214 may wrap around the sensing portion 211 in contact therewith.

Referring to FIG. 2, the moisture detection unit 210 may be fixed to the fixing support portion 220 via the extension portion 230, a lower end of the sensing portion 211 may be located higher than the plane where the lower end of the fixing support portion 220 is located, and the sensing portion 211 may be in indirect contact with the plane where the lower end of the fixing support portion 220 is located via the absorption member 214.

In a specific example, the leakage detection device may further include an indicator (not shown) configured to indicate moisture detection when the sensing portion 211 detects moisture. The indicator may be a means configured to display a color outside the leakage detection device 200 or a means configured to output an audible alarm.

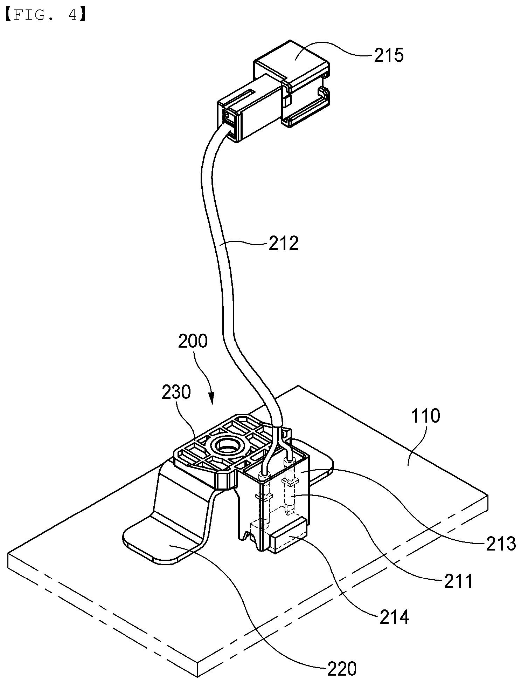

FIG. 4 is a partial perspective view of a battery pack according to a first embodiment having a leakage detection device attached to the bottom of the battery pack.

Referring to FIG. 4, the bottom of the first receiving portion 110 is formed in a flat shape, the fixing support portion 220 of the leakage detection device 200 is coupled to the flat bottom of the first receiving portion 110 in contact therewith, the sensing portion 211 of the leakage detection device 200 is disposed spaced apart from the bottom of the first receiving portion 110, and the absorption member 214 of the leakage detection device 200 is configured such that the lower end thereof is in contact with the bottom of the first receiving portion 110 and at least a part thereof is in contact with the sensing portion 211.

In a specific example, the leakage detection device 200 may be mounted at one corner of the bottom of the first receiving portion 110, and the bottom of the first receiving portion 110 may be inclined such that the part where the leakage detection device 200 is mounted slopes downward.

In this case, if a coolant leaks, the coolant may move along the slope of the bottom of the battery pack and gather in the leakage detection device 200, and therefore it is possible to rapidly detect even a small amount of coolant leakage.

When moisture comes into contact with the absorption member 214 of the leakage detection device 200, the moisture diffused through the absorption member 214 may come into contact with the sensing portion 211, and the sensing portion 211 may transmit a signal indicating contact with moisture to the BMS.

If the battery pack 100 is provided with an indicator or speaker configured to provide leakage notification, when a leakage signal is transmitted to the BMS, the signal may be displayed through the indicator or may be output through the speaker.

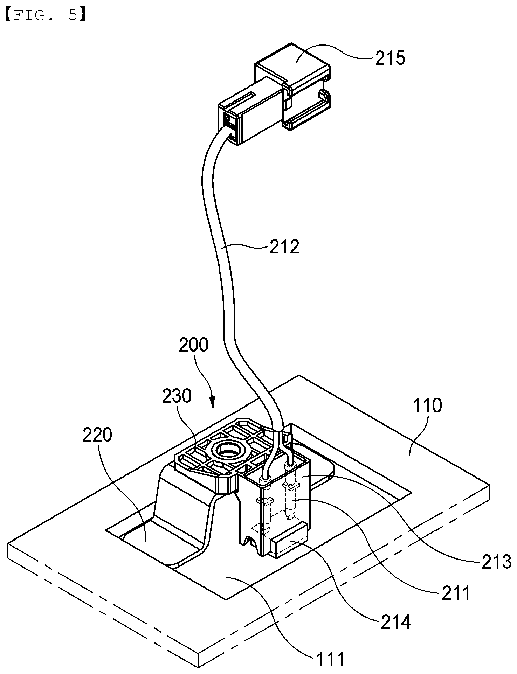

FIG. 5 is a partial perspective view of a battery pack according to a second embodiment having a leakage detection device attached to the bottom of the battery pack.

Referring to FIG. 5, a downwardly concave recess 111 is formed in at least a part of the bottom of the first receiving portion 110, the leakage detection device 200 is located in the recess 111, and the fixing support portion 220 of the leakage detection device 200 is coupled to the bottom of the recess 111 in contact therewith. The sensing portion 211 of the leakage detection device 200 is disposed spaced apart from the bottom of the recess 111, and the absorption member 214 of the leakage detection device 200 is configured such that the lower end thereof is in contact with the bottom of the recess 111 and at least a part thereof is in contact with the sensing portion 211.

Therefore, even if a small amount of coolant leaks, the leaked coolant may gather in the recess 111, and therefore it is possible to rapidly detect moisture through the absorption member 214 of the leakage detection device 200 fixed to the recess 111.

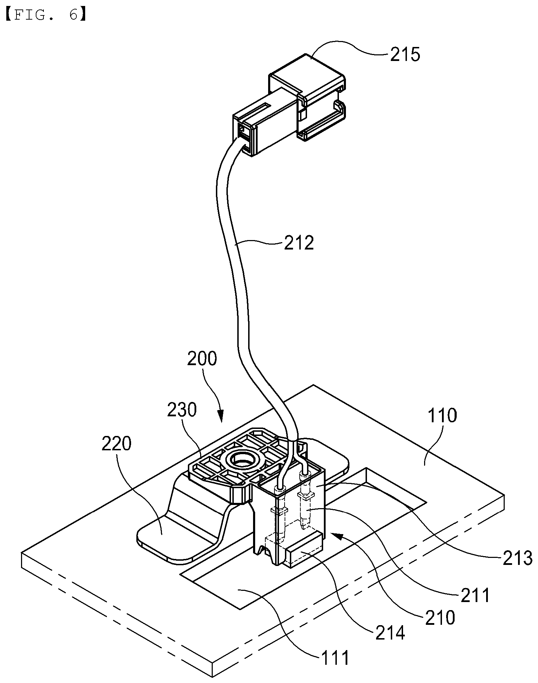

FIG. 6 is a partial perspective view of a battery pack according to a third embodiment having a leakage detection device attached to the bottom of the battery pack.

Referring to FIG. 6, a downwardly concave recess 111 is formed in at least a part of the bottom of the first receiving portion 110, the moisture detection unit 210 of the leakage detection device 200 is located in the recess 111, the fixing support portion 220 of the leakage detection device 200 is coupled to the bottom of the first receiving portion 110, excluding the recess 111, in contact therewith, the sensing portion 211 of the leakage detection device 200 is disposed spaced apart from the bottom of the recess 111, and the absorption member 214 of the leakage detection device 200 is configured such that the lower end thereof is in contact with the bottom of the recess 111 and at least a part thereof is in contact with the sensing portion 211.

Therefore, even if a small amount of coolant leaks, the leaked coolant may gather in the recess 111, and therefore it is possible to rapidly detect moisture through the absorption member 214 fixed to the recess 111.

In a specific example, a device including the battery pack, such as an electric vehicle, may include a controller configured to receive a signal indicating that the sensing portion 211 of the leakage detection device 200 has come into contact with moisture and an alarm member configured to provide the signal to a user as visual information or auditory information.

Specifically, in the battery pack shown in FIGs. 4, 5, and 6, the leakage detection device 200 may include a terminal 215 connected to the BMS or electrically connected to the alarm member located outside, and an instrument panel of the electric vehicle may display a signal from the battery pack. When moisture comes into contact with the sensing portion 214, a corresponding signal may be transmitted to the controller via the terminal 215, and the controller may convert the signal into visual information and display the visual information on the instrument panel. Alternatively, the sensing portion 214 may convert the signal indicating moisture contact into audible information and may provide the audible information to the user through a speaker disposed in the electric vehicle.

Upon recognizing such information, the user may rapidly exit the electric vehicle, thereby rapidly ensuring the user safety before a secondary accident caused by coolant leakage occurs.

Those skilled in the art to which the present invention pertains will appreciate that various applications and modifications are possible within the scope of the present invention based on the above description.

### (Description of Reference Numerals)

100: Battery pack
110: First receiving portion
111: Recess
120: Second receiving portion
200: Leakage detection device
210: Moisture detection unit
211: Sensing portion
212: Wire
213: Housing
214: Absorption member
215: Terminal
220: Fixing support portion
230: Extension portion

## Claims

1. A leakage detection device comprising:
a moisture detection unit to which an absorption member is coupled;
a fixing support portion configured to fix the moisture detection unit to a battery pack; and
an extension portion configured to fix the moisture detection unit to the fixing support portion, wherein
a lower end of the absorption member extends at least to a lower end of the fixing support portion.

2. The leakage detection device according to claim 1, wherein the moisture detection unit comprises:
a sensing portion configured to detect moisture;
a wire configured to supply current to the sensing portion;
a housing configured to receive the sensing portion therein; and
an absorption member coupled to the sensing portion in physical contact therewith.

3. The leakage detection device according to claim 2, wherein
the moisture detection unit is fixed to the fixing support portion via the extension portion,
a lower end of the sensing portion is located higher than a plane where the lower end of the fixing support portion is located, and
the sensing portion is in indirect contact with the plane where the lower end of the fixing support portion is located via the absorption member.

4. The leakage detection device according to claim 2, further comprising an indicator configured to indicate moisture detection by the sensing portion.

5. The leakage detection device according to claim 1, wherein the absorption member comprises fabric, sponge, or a superabsorbent polymer (SAP).

6. A battery pack comprising the leakage detection device according to any one of claims 1 to 5, the battery pack comprising:
a first receiving portion configured to receive at least one battery module;
a second receiving portion configured to receive a BMS and an electrical component configured to control and check operations of the battery module and the leakage detection device; and
the leakage detection device mounted on a bottom of the first receiving portion, wherein
the leakage detection device is fixed as a result of a lower part of the fixing support portion being coupled to the bottom of the first receiving portion, and
the lower end of the absorption member of the leakage detection device is located in contact with the bottom of the first receiving portion.

7. The battery pack according to claim 6, wherein the leakage detection device is mounted at one corner of the bottom of the first receiving portion.

8. The battery pack according to claim 6, wherein
the bottom of the first receiving portion is formed in a flat shape,
the fixing support portion of the leakage detection device is coupled to the flat bottom of the first receiving portion in contact therewith,
the sensing portion of the leakage detection device is disposed spaced apart from the bottom of the first receiving portion, and
the absorption member of the leakage detection device is configured such that the lower end thereof is in contact with the bottom of the first receiving portion and at least a part thereof is in contact with the sensing portion.

9. The battery pack according to claim 6, wherein
a downwardly concave recess is formed in at least a part of the bottom of the first receiving portion,
the leakage detection device is located in the recess,
the fixing support portion of the leakage detection device is coupled to the bottom of the recess in contact therewith,
the sensing portion of the leakage detection device is disposed spaced apart from the bottom of the recess, and
the absorption member of the leakage detection device is configured such that the lower end thereof is in contact with the bottom of the recess and at least a part thereof is in contact with the sensing portion.

10. The battery pack according to claim 6, wherein
a downwardly concave recess is formed in at least a part of the bottom of the first receiving portion,
the moisture detection unit of the leakage detection device is located in the recess,
the fixing support portion of the leakage detection device is coupled to the bottom of the first receiving portion, excluding the recess, in contact therewith,
the sensing portion of the leakage detection device is disposed spaced apart from the bottom of the recess, and
the absorption member of the leakage detection device is configured such that the lower end thereof is in contact with the bottom of the recess and at least a part thereof is in contact with the sensing portion.

11. The battery pack according to claim 8, wherein
the leakage detection device is mounted at one corner of the bottom of the first receiving portion, and
the bottom of the first receiving portion is inclined such that a part where the leakage detection device is mounted slopes downward.

12. The battery pack according to claim 6, wherein, when moisture comes into contact with the absorption member of the leakage detection device, the moisture diffused through the absorption member comes into contact with the sensing portion, and the sensing portion transmits a signal indicating contact with moisture to the BMS.

13. A device comprising the battery pack according to claim 6, the device comprising:
a controller configured to receive a signal indicating that the sensing portion of the leakage detection device has come into contact with moisture; and
an alarm member configured to provide the signal to a user as visual information or auditory information.
